# EUROPEAN PATENT SPECIFICATION

(11) **EP 3 742 682 B1**
(45) Date of publication and mention of the grant of the patent: **20.11.2024**
(21) Application number: 19741265.3
(22) Date of filing: 17.01.2019
(51) Int. Cl.: H04L 45/02

(54) **END-TO-END REROUTING METHOD AND APPARATUS**
VERFAHREN UND VORRICHTUNG ZUR PEER-TO-PEER-UMLEITUNG
PROCÉDÉ ET DISPOSITIF DE RÉACHEMINEMENT PAIR-À-PAIR

(30) Priority: 17.01.2018 CN 201810045886
(43) Date of publication of application: 25.11.2020
(73) Proprietor: ZTE Corporation, Shenzhen, Guangdong 518057 (CN)
(72) Inventor: QIAN, Jia, Shenzhen, Guangdong 518057 (CN); LU, Rongduo, Shenzhen, Guangdong 518057 (CN)
(74) Representative: Ricker, Mathias
(86) International application number: PCT/CN2019/072173
(87) International publication number: WO 2019/141211

(56) References cited:
- EP-A1- 2 866 394
- CN-A- 101 001 170
- CN-A- 101 645 795
- CN-A- 103 634 134
- US-B1- 7 180 866

## Description

### TECHNICAL FIELD

The present invention relates to the field of communication technologies, for example, to an end-to-end rerouting method and apparatus.

### BACKGROUND

Software defined network (SDN) is a network architecture which has following main features: the separation of a control plane and a data forwarding plane; the realization of centralized control and programmable network operations. Therefore, the flexible control of network flow and the flexible deployment of network services are realized, and a good platform is provided for the innovation of a core network and application.

In the field of transport network communications, each service has its own survivability requirement. Under different survivability requirements, the ability to resist network failures is different so as to provide differentiated services for different customers. With the emergence of an intelligent control plane, users may manually reroute services based on the needs of the service or the network. However, the intelligent control plane is a distributed control plane. Operations such as service setup, deletion, and rerouting all require the interaction through distributed signaling. Even in a single domain, the operations are very complicated, let alone cross-domain interconnection. Although many methods for recovering cross-domain services exist in the distributed control plane technology, in fact, due to complexity issues such as signaling interaction, the distributed control plane is unable to implement cross-domain commercial deployment in engineering. However, these requirements still exist in the software defined network, and are becoming more and more urgent. The cross-domain and multi-layer service in the related art has no capability of resisting network failure.

The EP 2 866 394 A1 discloses a method and an apparatus for transmitting inter-domain fault information. The method includes a service layer LSP determining that the protection or recovery of the service layer LSP is invalid; and the service layer LSP transmitting inter-domain fault information to a client layer of the service layer, wherein the inter-domain fault information is used for indicating that the protection or the recovery of the service layer LSP is invalid; and that the service layer LSP and the client layer LSP belong to different AS domains.

### SUMMARY

The present invention provides an end-to-end rerouting method and apparatus, which implements rerouting for cross-domain end-to-end services under the SDN hierarchical controller architecture, so that a flow of a cross-domain end-to-end service may be recovered end-to-end under the network failure, or a path for the cross-domain end-to-end service may be changed to a new path. The present disclosure provides an end-to-end rerouting method according to independent claim 1, and an end-to-end rerouting apparatus according to claim 7. Further improvements and embodiments are provided in the dependent claims.

The present invention also provides a storage medium including a stored program which when executed performs any of the methods described above.

The present invention also provides a processor configured to run a program which when executed performs any of the methods described above.

### BRIEF DESCRIPTION OF DRAWINGS

FIG. 1 is a flowchart of an end-to-end rerouting method according to an embodiment;
FIG. 2 is a flowchart of another end-to-end rerouting method according to an embodiment;
FIG. 3 is a structural block diagram of an end-to-end rerouting apparatus according to an embodiment;
FIG. 4 is a structural block diagram of an end-to-end rerouting apparatus according to another embodiment;
FIG. 5 is a schematic diagram of a cross-domain end-to-end connection service according to an embodiment;
FIG. 6 is a schematic diagram of a cross-domain connection service before service rerouting according to an embodiment;
FIG. 7 is a schematic diagram of a cross-domain connection service after service rerouting according to an embodiment;
FIG. 8 is a schematic diagram of a cross-domain connection service before service rerouting according to another embodiment; and
FIG. 9 is a schematic diagram of a cross-domain connection service after service rerouting according to another embodiment.

### DETAILED DESCRIPTION

Hereinafter the present invention will be described with reference to the drawings and in conjunction with embodiments.

The terms "first", "second" and the like in the description, claims and above drawings of the present invention are used to distinguish between similar objects and are not necessarily used to describe a particular order or sequence.

### Embodiment 1

The network architecture of the embodiment includes: multiple single-domain controllers and a multi-domain controller, where each single-domain controller controls one domain, the multi-domain controller controls multiple domains, two ports for cross-domain services may be located in different domains, and the multi-domain controller is connected to all single-domain controllers. The embodiment is suitable for SDN network.

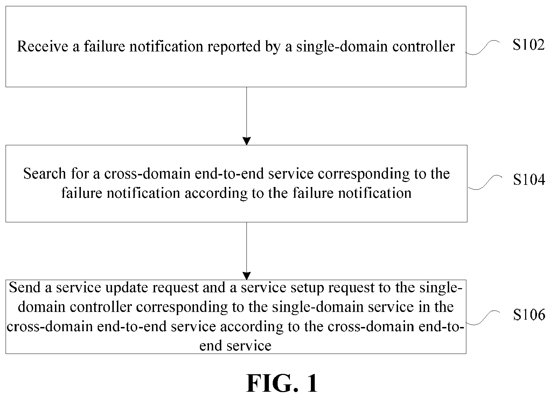

The present embodiment provides an end-to-end rerouting method executed on the network architecture described above. FIG. 1 is a flowchart of the end-to-end rerouting method according to the embodiment. As shown in FIG. 1, the process includes the following steps.

In step S 102, a failure notification reported by a single-domain controller is received.

In step S104, a cross-domain end-to-end service is searched for corresponding to the failure notification according to the failure notification.

In step S106, a service update request and a service setup request are sent to the single-domain controller corresponding to the single-domain service in the cross-domain end-to-end service according to the cross-domain end-to-end service. The service update request and service setup request may be sent to all single-domain controllers associated with the cross-domain end-to-end service (or all single-domain controllers of domains through which the cross-domain end-to-end service passes).

Through the above steps, by sending the service update request and the service setup request to the single-domain controller, the technical problem that the cross-domain service cannot realize end-to-end rerouting in the related art is solved, rerouting for cross-domain end-to-end services under the SDN hierarchical controller architecture is implemented, a flow of a cross-domain end-to-end service may be recovered end-to-end under the network failure, or a path for the cross-domain end-to-end service may be changed to a new path.

In an embodiment, the step of receiving the failure notification reported by the single-domain controller includes at least one of: receiving a first failure notification of a single-domain service recovery failure reported by the single-domain controller, where the first failure notification carries a universally unique identifier of the single-domain service; receiving a second failure notification generated by an inter-domain port failure reported by the single-domain controller, where the second failure notification carries a universally unique identifier of the inter-domain port; or receiving a third failure notification generated by an inter-domain link failure reported by the single-domain controller, where the third failure notification carries a universally unique identifier of the inter-domain link.

In an embodiment, the step of searching for the cross-domain end-to-end service corresponding to the failure notification according to the failure notification when receiving the first failure notification includes: searching for locally a cross-domain end-to-end service associated with the single-domain service according to the universally unique identifier of the single-domain service. The step of searching for the cross-domain end-to-end service corresponding to the failure notification according to the failure notification when receiving the second failure notification includes: searching for locally saved port information of the inter-domain port according to the universally unique identifier of the inter-domain port; and searching for all cross-domain end-to-end services borne on the inter-domain port according to the port information. The step of searching for the cross-domain end-to-end service corresponding to the failure notification according to the failure notification when receiving the third failure notification includes: searching for the corresponding cross-domain end-to-end service according to the universally unique identifier of the inter-domain link.

In an embodiment, the protection strategy includes one of: dynamic recovery or preset recovery. The two protection strategies correspond to the following two scenarios respectively.

In scenario one, the step of sending a service update request and a service setup request to the single-domain controller corresponding to the single-domain service in the cross-domain end-to-end service according to the cross-domain end-to-end service includes the following steps.

In S 110, a fault-tolerance type of the cross-domain end-to-end service is parsed.

In S120, when the protection type of the fault-tolerance type is the dynamic recovery and the recovery strategy is end-to-end recovery, a cross-domain rerouting path and cross-domain rerouting path resource for the cross-domain end-to-end service is determined. In an embodiment, the inter-domain path and inter-domain resource for the rerouting path are calculated in real time to obtain the rerouting path and cross-domain rerouting path resource.

In S 130, the service update request is sent to the single-domain controller of the boundary domain through which the rerouting path passes, a newly added connectivity service end point is carried, the connectivity service end point corresponding to the network-side boundary port of each single-domain in the cross-domain rerouting path resource may be used as the newly added connectivity service end point of each single-domain service of the cross-domain end-to-end service, and the service setup request is sent to the single-domain controller of the intermediate domain through which the rerouting path passes.

In scenario two, the step of sending a service update request and a service setup request to the single-domain controller according to the cross-domain end-to-end service includes the following steps.

In S210, a fault-tolerance type of the cross-domain end-to-end service is parsed.

In S220, when the protection type of the fault-tolerance type is the preset recovery and the recovery strategy is end-to-end recovery, a cross-domain rerouting path and cross-domain rerouting path resource for the cross-domain end-to-end service is determined. In an embodiment, the rerouting path and the cross-domain rerouting path resource may be obtained through the cross-domain rerouting path and the inter-domain resource preset in advance.

In S230, a connectivity service end point corresponding to a network-side boundary port of each single-domain in the cross-domain rerouting path resource is used as a newly added connectivity service end point of single-domain service corresponding to the each single-domain in the cross-domain end-to-end service, and a service update request is sent to a single-domain controller in a boundary domain through which the rerouting path passes, and sending a service setup request to a single-domain controller in an intermediate domain through which the rerouting path passes. In an embodiment, after sending the service update request and the service setup request to the single-domain controller corresponding to the single-domain service in the cross-domain end-to-end service according to the cross-domain end-to-end service, the method further includes: receiving a response result of the service update request and a response result of the service setup request sent by a single-domain controller corresponding to single-domain service in the cross-domain end-to-end service, and perfecting business information of the cross-domain end-to-end service according to service information of each domain; and in an embodiment, the response result of the service update request carries service information about the single-domain service in a domain to which the single-domain controller receiving the update request or setup request belongs.

After receiving the failure notification, in the case of dynamic recovery of a service, it is necessary to calculate the cross-domain path in real time; in the case of preset recovery, the pre-configured preset path may be used; for manual triggering other than failure triggering, the rerouting path calculation is performed upon receiving the service update request. The two major types of rerouting requests are mainly distinguished by the triggering method, one is network failure triggering, and the other is manual triggering. The scheme of the service update request triggered manually is described below.

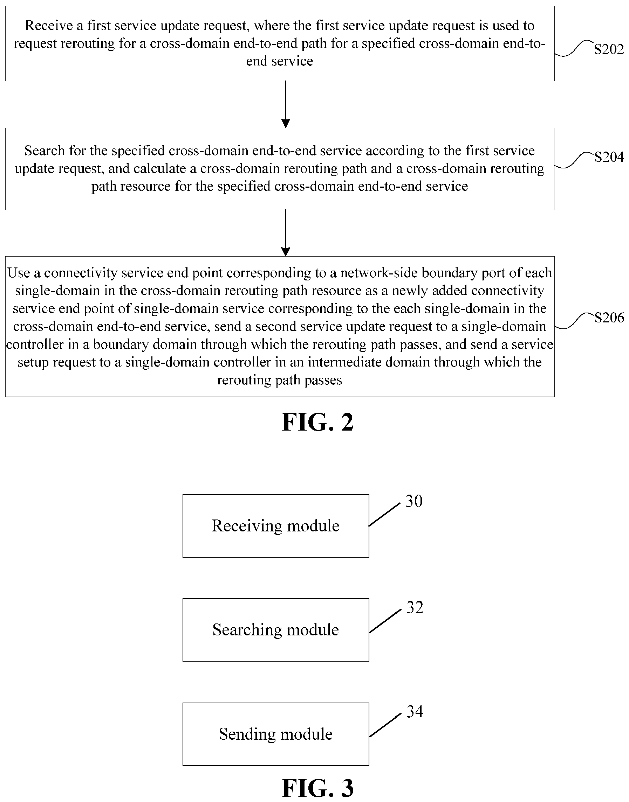

The present embodiment provides an end-to-end rerouting method executed on the network architecture described above. FIG. 2 is a flowchart of another end-to-end rerouting method according to the embodiment. As shown in FIG. 2, the process includes the following steps.

In step S202, a first service update request is received, where the first service update request is used to request rerouting for a cross-domain end-to-end path for a specified cross-domain end-to-end service.

In step S204, the specified cross-domain end-to-end service is searched for according to the first service update request, and a cross-domain rerouting path and a cross-domain rerouting path resource for the specified cross-domain end-to-end service are calculated.

In step S206, a connectivity service end point corresponding to a network-side boundary port of each single-domain in the cross-domain rerouting path resource is used as a newly added connectivity service end point of single-domain service corresponding to the each single-domain in the cross-domain end-to-end service, a second service update request is sent to a single-domain controller in a boundary domain through which the rerouting path passes, and a service setup request is sent to a single-domain controller in an intermediate domain through which the rerouting path passes.

In an embodiment, the first service update request includes a universally unique identifier, an update service type, a connectivity service end point list and topology constraint of the specified cross-domain end-to-end service; or the first service update request includes a universally unique identifier, an update service type, and topology constraint of the specified cross-domain end-to-end service. The topology constraint carries at least one of: a loosely contained link, a loosely contained node, a strictly contained link, a strictly contained node, an excluded node, an excluded link, a boundary point of the contained node, or a boundary point of the excluded node.

From the description of the embodiment described above, those skilled in the art may understand that that the methods in the embodiment described above may be implemented by software plus a necessary general-purpose hardware platform, or may of course be implemented by hardware. Based on such understanding, the technical solution of the present invention may be embodied in the form of a software product. The computer software product is stored in a storage medium (such as a read-only memory (ROM), a random-access memory (RAM), a magnetic disk or an optical disk) and the storage medium includes multiple instructions for enabling a terminal device (which may be a mobile phone, a computer, a server, or a network device) to execute the method described according to each embodiment of the present invention.

### Embodiment 2

An end-to-end rerouting apparatus is further provided in the embodiment. The apparatus is configured to implement the above-mentioned embodiments. What has been described will not be described in detail. As used below, the term "module" may be software, hardware or a combination thereof capable of implementing predetermined functions. The apparatus in the embodiment described below may be implemented by software, but implementation by hardware or by a combination of software and hardware is also possible and conceived.

FIG. 3 is a structural block diagram of an end-to-end rerouting apparatus according to an embodiment, which is applied to a multi-domain controller. As shown in FIG. 3, the apparatus includes: a receiving module 30, which is configured to receive a failure notification reported by a single-domain controller; a searching module 32, which is configured to search for a cross-domain end-to-end service corresponding to the failure notification according to the failure notification; a sending module 34, which is configured to send a service update request and a service setup request to the single-domain controller corresponding to the single-domain service in the cross-domain end-to-end service according to the cross-domain end-to-end service.

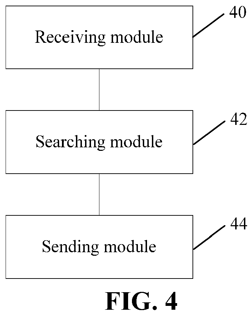

FIG. 4 is a structural block diagram of an end-to-end rerouting apparatus according to another embodiment, which is applied to a multi-domain controller. As shown in FIG. 4, the apparatus includes: a receiving module 40, which is configured to receive a first service update request, where the first service update request is used to request rerouting for a cross-domain end-to-end path for a specified cross-domain end-to-end service; a searching module 42, which is configured to searching for the specified cross-domain end-to-end service according to the first service update request, and calculating a cross-domain rerouting path and a cross-domain rerouting path resource for the specified cross-domain end-to-end service; and a sending module 44, which is configured to use a connectivity service end point corresponding to a network-side boundary port of each single-domain in the cross-domain rerouting path resource as a newly added connectivity service end point of single-domain service corresponding to the each single-domain in the specified cross-domain end-to-end service, send a second service update request to a single-domain controller in a boundary domain through which the cross-domain rerouting path passes, and send a service setup request to a single-domain controller in an intermediate domain through which the cross-domain rerouting path passes.

The multiple modules described above may be implemented by software or hardware. Implementation by hardware may, but may not necessarily, be performed in the following manners: the various modules described above are located in a same processor, or the multiple modules described above are located in their respective processors in any combination form.

### Embodiment 3

The embodiment provides a cross-domain end-to-end rerouting method of a cross-domain multi-layer service to solve a problem of end-to-end rerouting for the cross-domain service in software defined network technology. The cross-domain end-to-end service flow may be dynamically recovered in the event of a network failure or rerouted to another path on a manual demand. The cross-domain end-to-end service and the single-domain service involved in the cross-domain service have been established in the network through the interaction of hierarchical controllers. Each service information includes a universally unique identifier for the service, a connectivity service end point list, a connectivity constraint, and a fault-tolerance constraint.

In the embodiment, the connectivity service end point carries a service interface point (SIP) index corresponding to the connectivity service end point and adaptation information of multiple layer protocols; a service interface point includes resource pool attributes of multiple layer protocols of the network, and provides resource information for each layer of the network; the connectivity constraint carries information such as a service type, request bandwidth information, a routing strategy, and a service level; the fault-tolerance constraint carries information such as a network layer, an fault-tolerance type, a return mode, delay time, and waiting recovery time; the fault-tolerance type includes a recovery strategy and a protection type; the recovery strategy includes domain-by-domain recovery, end-to-end recovery and none; and the protection type includes no protection, 1+1 protection, dynamic recovery, preset recovery, and 1+1 protection and recovery. The embodiment provides a method for realizing rerouting for cross-domain end-to-end service by utilizing interactive cooperation of the hierarchical controllers, and the method includes: a dynamic rerouting method of the cross-domain end-to-end service, a preset rerouting method of the cross-domain end-to-end service and a manual rerouting method of the cross-domain end-to-end service, so that rerouting for the cross-domain end-to-end service is realized in three scenarios. The dynamic rerouting method of the cross-domain end-to-end service includes the following steps.

In step 1, a multi-domain controller receives a notification of recovery failure of a single-domain service or a notification of the failure of an inter-domain port reported by a single-domain controller.

In the embodiment, the information carried in the notification of the recovery failure of the single-domain service includes a universally unique identifier, and an indication of the recovery failure of the service.

In the embodiment, the information carried in the notification of the failure of the inter-domain port includes a universally unique identifier of the inter-domain port, and a degree of impact of failure on service.

In step 2, the multi-domain controller finds the cross-domain end-to-end service associated with the single-domain service in the multi-domain controller according to the universally unique identifier of the single-domain service carried in the notification; or finds the port information stored in the multi-domain controller according to the universally unique identifier of the inter-domain port carried in the notification, then finds all the cross-domain end-to-end services borne on the inter-domain port, and determines the subsequent processing according to the fault-tolerance type in the fault-tolerance constraint of the found cross-domain end-to-end service.

In an embodiment, the subsequent processing is that, when the protection type is dynamic recovery and the recovery strategy is end-to-end recovery, the inter-domain path and inter-domain resource for the cross-domain rerouting path are calculated for the found cross-domain end-to-end service, and then step 3 is executed.

In step 3, the multi-domain controller takes the connectivity service end point corresponding to the network side boundary port of each single-domain in the calculated cross-domain rerouting path resource as a newly added connectivity service end point of each single-domain service in the cross-domain service, sends a service update request to a single-domain controller in a boundary domain through which the rerouting path for the cross-domain service passes, and sends a service setup request to a single-domain controller in an intermediate domain through which the rerouting path for the cross-domain service passes, and setup a new single-domain service.

In the embodiment, the information carried in the service update request includes a universally unique identifier of the single-domain service, an update service type, and a connectivity service end point list; the update service type is multi-domain recovery; the end points in the connectivity service end point list have newly added connectivity service end points in addition to the original connectivity service end points of the single-domain service; the information carried by the service setup request includes the connectivity service end point, connectivity constraint and fault-tolerance constraint of the single-domain service.

In step 4, the multi-domain controller receives a service update request or a response result of a service setup request of each single-domain controller, perfects the information of the cross-domain end-to-end service according to the service information of each domain, and the dynamic rerouting execution of the cross-domain end-to-end service is finished.

The preset rerouting method of the cross-domain end-to-end service in the embodiment includes: in the second step of the dynamic rerouting method of the cross-domain end-to-end service, subsequent processing is determined according to the fault-tolerance type in the fault-tolerance constraint of the found cross-domain end-to-end service. In the embodiment, when the protection type is preset recovery and the recovery strategy is end-to-end recovery, step 3 of the dynamic rerouting method of cross-domain end-to-end service is directly executed; the subsequent processing method is the same as the subsequent method of the dynamic rerouting method of the cross-domain end-to-end service, and will not be described in detail.

The manual rerouting method of the cross-domain end-to-end service of the embodiment includes the following steps.

In step 1, a multi-domain controller user requests the multi-domain controller to carry out optimization rerouting for the cross-domain end-to-end path on the appointed cross-domain end-to-end service, and sends a first service update request to the multi-domain controller.

In the embodiment, the information carried in the first service update request includes a universally unique identifier, an update service type, a connectivity service end point list and topology constraint of the single-domain service; the update service type is update the topology constraint; the topology constraint may carries a loosely contained link, a loosely contained node, a strictly contained link, a strictly contained node, an excluded node, an excluded link, a boundary point of the contained node, and a boundary point of the excluded node.

In step 2, the multi-domain controller finds the cross-domain end-to-end service of the multi-domain controller according to the universally unique identifier of the cross-domain service carried in the first service update request, and calculates the inter-domain path and inter-domain resource based on that the update service type is update the topology constraint and carried topology constraint information.

The subsequent processing method is the same as the step 3 and subsequent methods of the dynamic rerouting method of the cross-domain end-to-end service, and will not be described in detail.

The embodiment also includes the following examples.

### Example 1

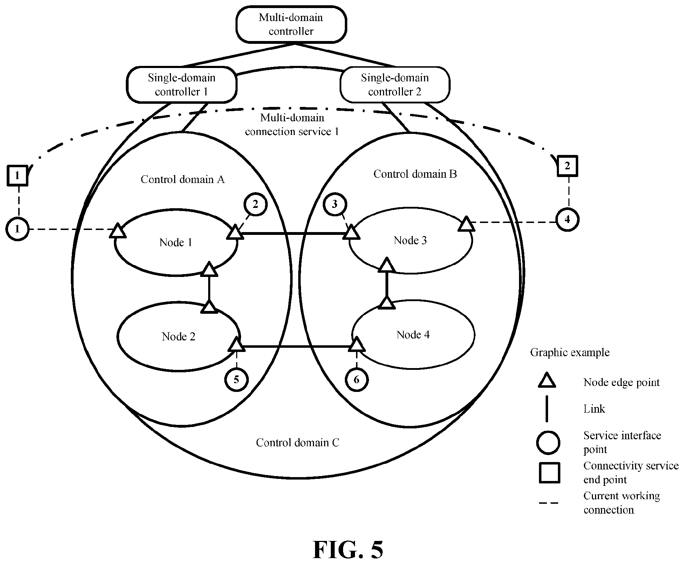

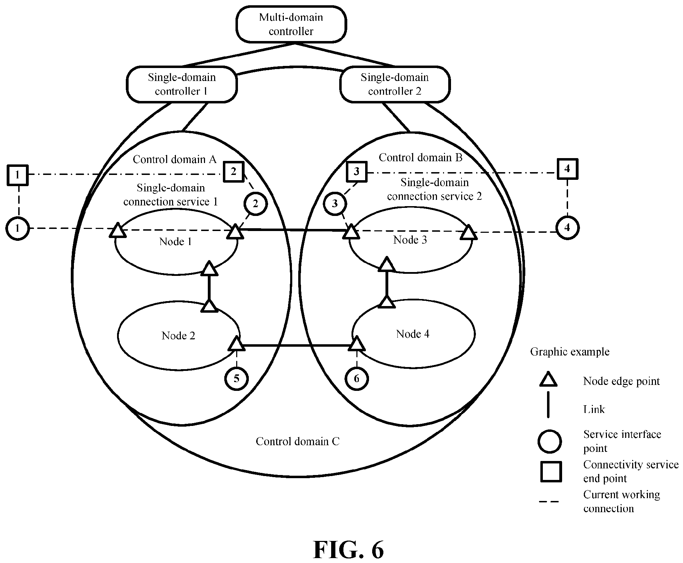

The example implements a dynamic rerouting method of the cross-domain end-to-end service. In the example, a multi-domain controller controls two single-domain controllers: single-domain controller 1 and single-domain controller 2, which control two control domains respectively: control domain A and control domain B. The multi-domain controller establishes a cross-domain end-to-end connection service: multi-domain connection service 1. FIG. 5 is a schematic diagram of the cross-domain end-to-end connection service according to the Example 1. The service interface points corresponding to the multi-domain connectivity service end point are service interface point 1 and service interface point 4. Single-domain connection services corresponding to the multi-domain connection service are single-domain connection service 1 and single-domain connection service 2. FIG. 6 is a schematic diagram of a cross-domain connection service before service rerouting according to the Example 1. Connectivity service end points of the single-domain connection service 1 in the control domain A are connectivity service end point 1 and connectivity service end point 2, and connectivity service end points of the single-domain connection service 2 in the control domain B are connectivity service end point 3 and connectivity service end point 4.

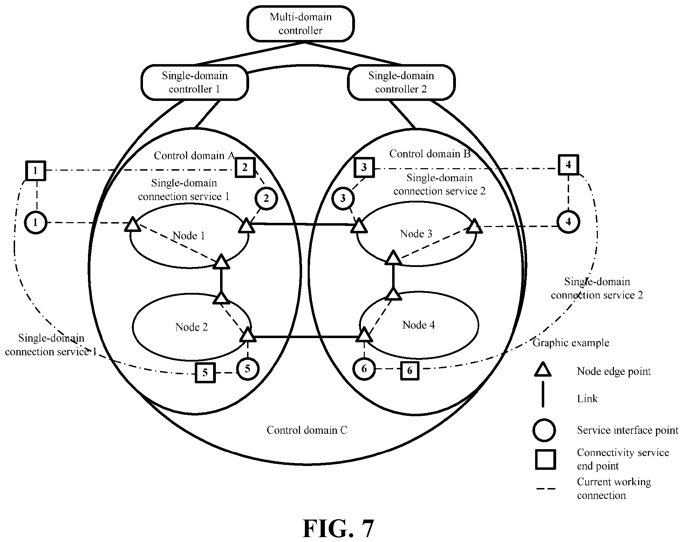

In step 1, the single-domain connection service 1 of the control domain A fails, and the single-domain controller 1 recovers the single-domain connection service. After the recovery fails, the single-domain controller 1 sends a notification of recovery failure to the multi-domain controller. The information carried in the notification of the recovery failure of the single-domain service includes a universally unique identifier, and an indication of the recovery failure of the service. In step 2, the multi-domain controller finds the associated cross-domain end-to-end service in the multi-domain controller according to the universally unique identifier of the single-domain service carried in the notification, determines the subsequent processing according to the fault-tolerance type in the fault-tolerance constraint of the found cross-domain end-to-end service, and when the protection type is dynamic recovery and the recovery strategy is end-to-end recovery, calculates the inter-domain path and the inter-domain resource for the cross-domain rerouting path for the found cross-domain end-to-end service. FIG. 7 is a schematic diagram of a cross-domain connection service after service rerouting of Example 1, the service interface points through which the newly calculated inter-domain path needs to pass are: service interface point 1 - service interface point 5 - service interface point 6 - service interface point 4, and then executing step 3.

In step 3, the multi-domain controller takes the connectivity service end point corresponding to the network side boundary port of each single-domain in the calculated cross-domain rerouting path resource as the new connectivity service end point of each single-domain service of the cross-domain service, that is, the connectivity service end point 5 of the control domain A is taken as the new connectivity service end point of the single-domain connection service of the domain, and the connectivity service end point 6 of the control domain B is taken as the new connectivity service end point of the single-domain connection service of the domain. The multi-domain controller sends service update requests to the single-domain controllers 1 and 2. The information carried in the service update request includes a universally unique identifier of the single-domain service, an update service type, and a connectivity service end point list; where the update service type is multi-domain recovery; where the end points in the connectivity service end point list have newly added connectivity service end points in addition to the original connectivity service end points of the single-domain service.

In the embodiment, the node edge points in FIGS. 5 to 9 are network side boundary ports.

In step 4, the multi-domain controller receives a response result of the service update request of each single-domain controller, perfects the information of the cross-domain end-to-end service according to the service information of each domain. The nodes passed by the new cross-domain end-to-end service route are node 1, node 2, node 4 and node 3, and the dynamic rerouting execution of the cross-domain end-to-end service is finished.

### Example 2

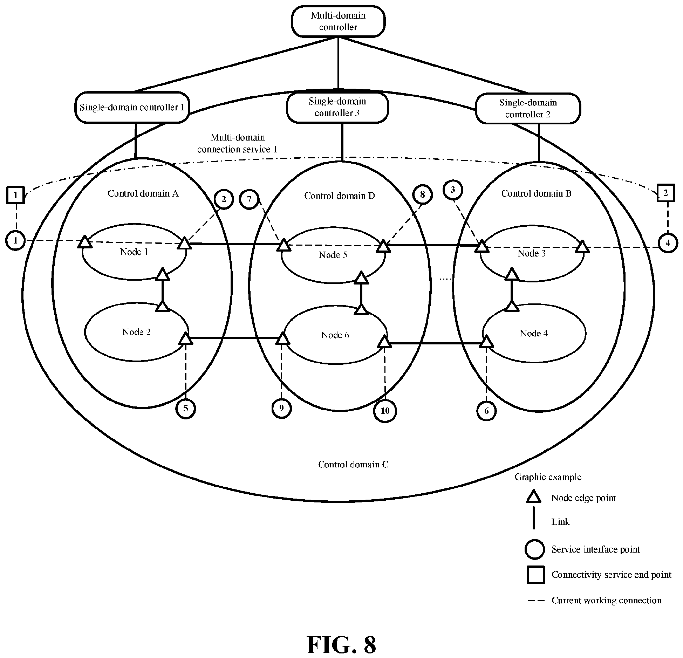

The example is based on Example 1. In the network topology of Example 1, the cross-domain end-to-end service also passes through the intermediate domain control domain D, as shown in FIG. 8. FIG. 8 is a schematic diagram of the cross-domain connection service before service rerouting of Example 2, the control domain D is controlled by a single-domain controller 3, and the single-domain controller is also controlled by the multi-domain controller. The path for the connection service passes through node 1, node 5 and node 3.

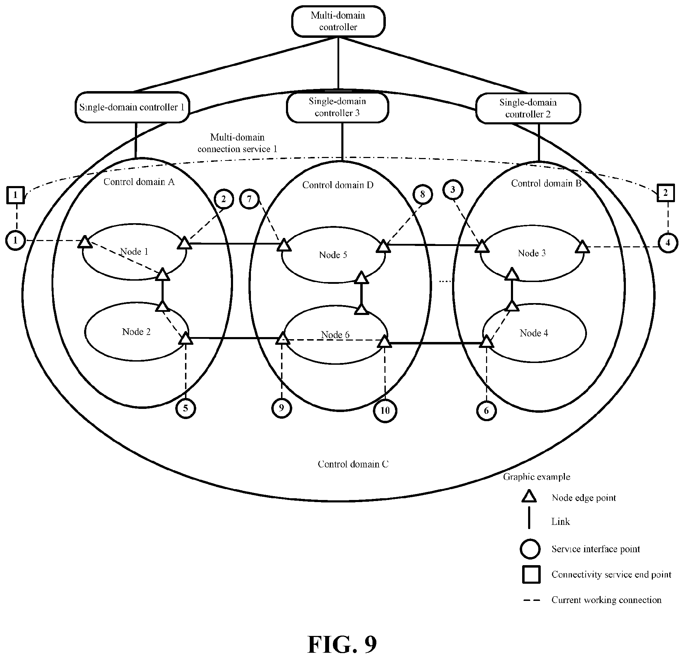

The first two steps of the example are the same as Example 1. In step 3, the newly calculated cross-domain path for the multi-domain controller passes through node 1, node 2, node 6, node 4, and node 3, that is, the setup of a new connection service in the control domain D is required. FIG. 9 is a schematic diagram of a cross-domain connection service after service rerouting of Example 2. The multi-domain controller takes the connectivity service end point 5 of the control domain A as a newly added connectivity service end point of the single-domain connection service of the domain, the connectivity service end point 6 of the control domain B is taken as a new connectivity service end point of the single-domain connection service of the domain, and the connectivity service end points 9 and 10 of the control domain D are taken as new connectivity service end points of the single-domain connection service of the domain. The multi-domain controller sends service update requests to the single-domain controllers 1 and 2, and the multi-domain controller sends a service setup request to the single-domain controller 3 to connect the service end points 9 and 10 as connectivity service end points. The information carried in the service update request includes a universally unique identifier of the single-domain service, an update service type, and a connectivity service end point list; where the update service type is multi-domain recovery; where the end points in the connectivity service end point list have the newly added connectivity service end points in addition to the original connectivity service end points of the single-domain service.

The multi-domain controller receives response results of the service update requests or service setup requests of multiple single-domain controllers, and the obtained connection service is shown in FIG. 9. The nodes passed by the new cross-domain end-to-end service route are node 1, node 2, node 6, node 4 and node 3, and the dynamic rerouting execution of the cross-domain end-to-end service is finished.

### Example 3

The example implements a preset rerouting method of the cross-domain end-to-end service. Similar to Example 1, in step 2 of example 1, the subsequent processing is determined according to the fault-tolerance type in the fault-tolerance constraint of the found cross-domain end-to-end service, and when the protection type is dynamic recovery and the recovery strategy is end-to-end recovery, the multi-domain controller uses the pre-calculated and preset cross-domain end-to-end connection service route to perform cross-domain service recovery, and directly executes the step 3 and the step 4 in the Example 1, which will not be described in detail.

### Example 4

The example implements the manual rerouting method of the cross-domain end-to-end service. In step 1, a multi-domain controller user requests the multi-domain controller to carry out optimization rerouting for the cross-domain end-to-end path on an appointed cross-domain end-to-end service, and sends a first service update request to the multi-domain controller.

The information carried in the first service update request includes a universally unique identifier, an update service type, a connectivity service end point list and topology constraint of the single-domain service; the update service type is update the topology constraint; the topology constraint may carries a loosely contained link, a loosely contained node, a strictly contained link, a strictly contained node, an excluded node, an excluded link, a boundary point of the contained node, and a boundary point of the excluded node.

In step 2, the multi-domain controller finds the cross-domain end-to-end service of the multi-domain controller according to the universally unique identifier of the cross-domain service carried in the first service update request, and calculates the cross-domain path based on that the update service type is update the topology constraint and carried topology constraint information. Subsequent processing methods are the same as steps 3 and 4 of Example 1 and will not be described in detail.

The embodiment implements rerouting for cross-domain end-to-end services under the SDN hierarchical controller architecture, so that a flow of the cross-domain end-to-end service may be recovered end-to-end under the network failure, or a path for the cross-domain end-to-end service may be changed to a new path upon the manual request.

### Embodiment 4

The embodiment also provides a storage medium including a stored program which when executed performs any of the methods described above.

In an embodiment, the storage medium may be configured to store program codes for performing the steps of: S10, receiving a failure notification reported by a single-domain controller; S20, searching for a cross-domain end-to-end service corresponding to the failure notification according to the failure notification; S30, sending a service update request and a service setup request to the single-domain controller corresponding to the single-domain service in the cross-domain end-to-end service according to the cross-domain end-to-end service.

In an embodiment, the storage medium may include, but is not limited to, at least one of the following medium that can store program codes: a U disk, a read-only memory (ROM), a random access memory (RAM), a removable hard disk, a magnetic disk, or an optical disk.

The present invention also provides a processor configured to run a program which, when executed, performs any of the methods described above.

In an embodiment, the program is configured to perform the following steps: S10, receiving a failure notification reported by a single-domain controller; S20, searching for a cross-domain end-to-end service corresponding to the failure notification according to the failure notification; S3, sending a service update request and a service setup request to the single-domain controller corresponding to the single-domain service in the cross-domain end-to-end service according to the cross-domain end-to-end service.

For specific examples in the embodiment, reference may be made to the examples described in the above embodiments, and the examples will not be described in detail in the embodiment.

The above-mentioned at least one module or at least one step of the present invention may be implemented by a general-purpose computing apparatus, and the at least one module or at least one step may be concentrated on a single computing apparatus or distributed on a network composed of multiple computing apparatuses. In an embodiment, at least one module or at least one step may be implemented by program codes executable by the computing apparatus, so that at least one module or at least one step may be stored in a storage apparatus and executed by the computing apparatus. In some circumstances, the illustrated or described steps may be executed in sequences different from those described herein, or at least one module or at least one step may be made into various integrated circuit modules separately, or at least one module or multiple modules or steps in at least one step may be made into a single integrated circuit module for implementation. In this way, the present invention is not limited to any specific combination of hardware and software.

## Claims

1. An end-to-end rerouting method, executed on a network architecture, wherein the network architecture comprises multiple single-domain controllers and a multi-domain controller, each single-domain controller controls one domain, the multi-domain controller controls multiple domains, two ports for cross-domain services are located in different domains, the multi-domain controller is connected to all single-domain controllers, and the method comprises:
receiving (S102) a failure notification reported by a single-domain controller;
searching (S104), according to the failure notification, for a cross-domain end-to-end service corresponding to the failure notification; the method being **characterized in** :
sending (S106), according to the cross-domain end-to-end service, a service update request and a service setup request to all single-domain controllers of domains through which the cross-domain end-to-end service passes to implement a rerouting for the cross-domain end-to-end service,
wherein sending (S106), according to the cross-domain end-to-end service, the service update request and the service setup request to all single-domain controllers of domains through which the cross-domain end-to-end service passes comprises:
acquiring a cross-domain rerouting path and a cross-domain rerouting path resource for the cross-domain end-to-end service; and
using a connectivity service end point corresponding to a network-side boundary port of each single-domain in the cross-domain rerouting path resource as a newly added connectivity service end point of single-domain service corresponding to the each single-domain in the cross-domain end-to-end service, sending a service update request to a single-domain controller in a boundary domain through which the cross-domain rerouting path passes, and sending a service setup request to a single-domain controller in an intermediate domain through which the cross-domain rerouting path passes; and
after sending (S106), according to the cross-domain end-to-end service, the service update request and the service setup request to all single-domain controllers of domains through which the cross-domain end-to-end service passes, the method further comprises:
receiving response results of the service update request and the service setup request sent by all single-domain controllers of domains through which the cross-domain end-to-end service passes, and perfecting information of the cross-domain end-to-end service according to service information of each domain,
wherein a response result of the service update request carries service information about a single-domain service in a domain to which the single-domain controller receiving the service update request belongs, and a response result of the service setup request carries single-domain service information of a domain to which the single-domain controller receiving the service setup request belongs.

2. The method of claim 1, wherein receiving (S102) the failure notification reported by the single-domain controller comprises at least one of:
receiving a first failure notification of a single-domain service recovery failure reported by the single-domain controller, wherein the first failure notification carries a universally unique identifier of the single-domain service;
receiving a second failure notification generated by an inter-domain port failure reported by the single-domain controller, wherein the second failure notification carries a universally unique identifier of the inter-domain port; or
receiving a third failure notification generated by an inter-domain link failure reported by the single-domain controller, wherein the third failure notification carries a universally unique identifier of the inter-domain link.

3. The method of claim 2, wherein in a case of receiving the first failure notification, searching (S104), according to the failure notification, for the cross-domain end-to-end service corresponding to the failure notification comprises:
searching for a cross-domain end-to-end service associated with the single-domain service in the multi-domain controller according to the universally unique identifier of the single-domain service.

4. The method of claim 2, wherein in a case of receiving the second failure notification, searching (S104), according to the failure notification, for the cross-domain end-to-end service corresponding to the failure notification comprises:
searching for locally saved port information of the inter-domain port according to the universally unique identifier of the inter-domain port; and
searching for all cross-domain end-to-end services borne on the inter-domain port according to the port information.

5. The method of claim 2, wherein in a case of receiving the third failure notification, searching (S104), according to the failure notification, for the cross-domain end-to-end service corresponding to the failure notification comprises:
searching for the corresponding cross-domain end-to-end service according to the universally unique identifier of the inter-domain link.

6. The method of claim 1, wherein acquiring the cross-domain rerouting path and the cross-domain rerouting path resource for the cross-domain end-to-end service comprises:
parsing a fault-tolerance type of the cross-domain end-to-end service; and
in a case of a protection type being dynamic recovery for the fault-tolerance type, obtaining the cross-domain rerouting path and the cross-domain rerouting path resources by calculating an inter-domain path and an inter-domain resource for the cross-domain rerouting path of the cross-domain end-to-end service in real time,
or, wherein acquiring the cross-domain rerouting path and the cross-domain rerouting path resource for the cross-domain end-to-end service comprises:
parsing a fault-tolerance type of the cross-domain end-to-end service; and
in a case of a protection type being preset recovery for the failure-tolerant type, obtaining the cross-domain rerouting path and the cross-domain rerouting path for the cross-domain end-to-end service according to a preset cross-domain rerouting path and a preset inter-domain resource.

7. An end-to-end rerouting apparatus, applied to a multi-domain controller comprised in a network architecture, wherein the network architecture comprises multiple single-domain controllers and the multi-domain controller, each single-domain controller controls one domain, the multi-domain controller controls multiple domains, two ports for cross-domain services are located in different domains, the multi-domain controller is connected to all single-domain controllers, and the apparatus comprises:
a receiving module (30), which is configured to receive a failure notification reported by a single-domain controller;
a searching module (32), which is configured to search, according to the failure notification, for a cross-domain end-to-end service corresponding to the failure notification;
the apparatus being **characterized in** comprising :
a sending module (34), which is configured to send, according to the cross-domain end-to-end service, a service update request and a service setup request to all single-domain controllers of domains through which the cross-domain end-to-end service passes,
wherein the sending module (34) is configured to send, according to the cross-domain end-to-end service, a service update request and a service setup request to all single-domain controllers of domains through which the cross-domain end-to-end service passes comprises that the sending module (34) is configured to:
acquire a cross-domain rerouting path and a cross-domain rerouting path resource for the cross-domain end-to-end service; and
use a connectivity service end point corresponding to a network-side boundary port of each single-domain in the cross-domain rerouting path resource as a newly added connectivity service end point of single-domain service corresponding to the each single-domain in the cross-domain end-to-end service, send a service update request to a single-domain controller in a boundary domain through which the cross-domain rerouting path passes, and send a service setup request to a single-domain controller in an intermediate domain through which the cross-domain rerouting path passes;
after the sending module (34) sends, according to the cross-domain end-to-end service, the service update request and the service setup request to all single-domain controllers of domains through which the cross-domain end-to-end service passes ,
the apparatus is configured to receive response results of the service update request and the service setup request sent by all single-domain controllers of domains through which the cross-domain end-to-end service passes, and perfect information of the cross-domain end-to-end service according to service information of each domain,
wherein a response result of the service update request carries service information about a single-domain service in a domain to which the single-domain controller receiving the service update request belongs, and a response result of the service setup request carries single-domain service information of a domain to which the single-domain controller receiving the service setup request belongs.

8. A storage medium, comprising stored programs, **characterized in that** when run, the programs execute the method of any one of claims 1 to 6.

9. A processor, which is configured to run programs **characterized in that**, when run, the programs execute the method of any one of claims 1 to 6.

## Patentansprüche

1. Ende-zu-Ende-Umleitungsverfahren, ausgeführt auf einer Netzwerkarchitektur, wobei die Netzwerkarchitektur mehrere Einzeldomänen-Steuerungen und eine Multi-Domänen-Steuerung umfasst, wobei jede Einzeldomänen-Steuerung eine Domäne steuert, die Multi-Domänen-Steuerung mehrere Domänen steuert, zwei Ports für domänenübergreifende Dienste in unterschiedlichen Domänen angeordnet sind, die Multi-Domänen-Steuerung mit allen Einzeldomänen-Steuerungen verbunden ist, und das Verfahren Folgendes umfasst:
Empfangen (S102) einer Fehlerbenachrichtigung, die von einer Einzeldomänen-Steuerung gemeldet wird;
Suchen (S104) nach einem domänenübergreifenden End-to-End-Dienst, der der Fehlerbenachrichtigung entspricht, gemäß der Fehlerbenachrichtigung; wobei das Verfahren durch Folgendes gekennzeichnet ist:
Senden (S106) einer Dienstaktualisierungsanforderung und einer Diensteinrichtungsanforderung an alle Einzeldomänen-Steuerungen von Domänen, durch die der domänenübergreifende End-to-End-Dienst durchläuft, gemäß dem domänenübergreifenden End-to-End-Dienst, um eine Umleitung für den domänenübergreifenden End-to-End-Dienst zu implementieren,
wobei das Senden (S106) einer Dienstaktualisierungsanforderung und einer Diensteinrichtungsanforderung an alle Einzeldomänen-Steuerungen von Domänen, durch die der domänenübergreifende End-to-End-Dienst durchläuft, gemäß dem domänenübergreifenden End-to-End-Dienst Folgendes umfasst:
Erfassen eines domänenübergreifenden Umleitungspfads und einer domänenübergreifenden Umleitungspfad-Ressource für den domänenübergreifenden End-to-End-Dienst; und
Verwenden eines Konnektivitätsdienst-Endpunkts, der einem netzwerkseitigen Grenzanschluss jeder einzelnen Domäne in der domänenübergreifenden Umleitungspfadressource entspricht, als einen neu hinzugefügten Konnektivitätsdienst-Endpunkt eines Einzeldomänen-Dienstes, der der jeweiligen Einzeldomäne in dem domänenübergreifenden End-to-End-Dienst entspricht, Senden einer Dienstaktualisierungsanforderung an eine Einzeldomänen-Steuerung in einer Grenzdomäne, durch die der domänenübergreifende Umleitungspfad verläuft, und Senden einer Diensteinrichtungsanforderung an eine Einzeldomänen-Steuereinheit in einer Zwischendomäne, durch die der domänenübergreifende Umleitungspfad verläuft; und
wobei nach dem Senden (S106) der Dienstaktualisierungsanforderung und der Diensteinrichtungsanforderung an alle Einzeldomänen-Steuerungen von Domänen, durch die der domänenübergreifende End-to-End-Dienst durchläuft, gemäß dem domänenübergreifenden End-to-End-Dienst das Verfahren ferner Folgendes umfasst:
Empfangen von Antwortergebnissen der Dienstaktualisierungsanforderung und der Diensteinrichtungsanforderung, die von allen Einzeldomänen-Steuerungen der Domänen, durch die der domänenübergreifende End-to-End-Dienst läuft, gesendet werden, und Perfektionieren von Informationen des domänenübergreifenden End-to-End-Dienstes gemäß den Dienstinformationen jeder Domäne,
wobei ein Antwortergebnis der Dienstaktualisierungsanforderung Dienstinformationen über einen Einzeldomänen-Dienst in einer Domäne trägt, zu der die Einzeldomänen-Steuerung gehört, die die Dienstaktualisierungsanforderung empfängt, und ein Antwortergebnis der Diensteinrichtungsanforderung Einzeldomänen-Dienstinformationen einer Domäne trägt, zu der die Einzeldomänen-Steuerung gehört, die die Diensteinrichtungsanforderung empfängt.

2. Verfahren nach Anspruch 1, wobei das Empfangen (S102) der Fehlerbenachrichtigung, die von der Einzeldomänen-Steuerung gemeldet wird, mindestens einen der folgenden Schritte umfasst:
Empfangen einer ersten Fehlerbenachrichtigung eines Einzeldomänen-Dienstwiederherstellungsfehlers, der von der Einzeldomänen-Steuerung gemeldet wird, wobei die erste Fehlerbenachrichtigung eine universell eindeutige Kennung des Einzeldomänen-Dienstes trägt;
Empfangen einer zweiten Fehlerbenachrichtigung, die durch einen Inter-Domänen-Port-Fehler erzeugt wird, der von der Einzeldomänen-Steuerung gemeldet wird, wobei die zweite Fehlerbenachrichtigung eine universell eindeutige Kennung des Inter-Domänen-Ports trägt; oder
Empfangen einer dritten Fehlerbenachrichtigung, die durch einen Inter-Domänen-Verbindungsfehler erzeugt wird, der von der Einzeldomänen-Steuerung gemeldet wird, wobei die dritte Fehlerbenachrichtigung eine universell eindeutige Kennung der Inter-Domänen-Verbindung trägt.

3. Verfahren nach Anspruch 2, wobei beim Empfangen der ersten Fehlerbenachrichtigung das Suchen (S104) nach dem domänenübergreifenden End-to-End-Dienst, der der Fehlerbenachrichtigung entspricht, gemäß der Fehlerbenachrichtigung Folgendes umfasst:
Suchen nach einem domänenübergreifenden End-to-End-Dienst, der mit dem Einzeldomänen-Dienst in der Multi-Domänen-Steuerung assoziiert ist, gemäß der universell eindeutigen Kennung des Einzeldomänen-Dienstes.

4. Verfahren nach Anspruch 2, wobei beim Empfangen der zweiten Fehlerbenachrichtigung das Suchen (S104) nach dem domänenübergreifenden End-to-End-Dienst, der der Fehlerbenachrichtigung entspricht, gemäß der Fehlerbenachrichtigung Folgendes umfasst:
Suchen nach lokal gespeicherten Portinformationen des Inter-Domänen-Ports gemäß der universell eindeutigen Kennung des Inter-Domänen-Ports; und
Suchen nach allen domänenübergreifenden Ende-zu-Ende-Diensten, die auf dem Inter-Domänen-Port getragen werden, gemäß der Port-Information.

5. Verfahren nach Anspruch 2, wobei beim Empfangen der dritten Fehlerbenachrichtigung das Suchen (S104) nach dem domänenübergreifenden End-to-End-Dienst, der der Fehlerbenachrichtigung entspricht, gemäß der Fehlerbenachrichtigung Folgendes umfasst:
Suchen nach dem entsprechenden domänenübergreifenden End-zu-End-Dienst gemäß der universell eindeutigen Kennung der Inter-Domänen-Verbindung.

6. Verfahren nach Anspruch 1, wobei das Erfassen des domänenübergreifenden Umleitungspfads und der domänenübergreifenden Umleitungspfadressource für den domänenübergreifenden End-zu-End-Dienst Folgendes umfasst:
Parsen eines Fehlertoleranztyps des domänenübergreifenden End-to-End-Dienstes; und
Erfassen des domänenübergreifenden Umleitungspfads und der domänenübergreifenden Umleitungspfadressourcen durch Berechnen eines Inter-Domänen-Pfades und einer Inter-Domänen-Ressource für den domänenübergreifenden Umleitungspfad des domänenübergreifenden End-to-End-Dienstes in Echtzeit in einem Fall eines Schutztyps, der eine dynamische Wiederherstellung für den Fehlertoleranztyp ist,
oder wobei das Erfassen des domänenübergreifenden Umleitungspfads und der domänenübergreifenden Umleitungspfadressource für den domänenübergreifenden End-zu-End-Dienst Folgendes umfasst:
Parsen eines Fehlertoleranztyps des domänenübergreifenden End-to-End-Dienstes; und
Erfassen des domänenübergreifenden Umleitungspfads und des domänenübergreifenden Umleitungspfads für den domänenübergreifenden End-to-End-Dienst gemäß einem voreingestellten domänenübergreifenden Umleitungspfad und einer voreingestellten Inter-Domänen-Ressource in einem Fall eines Schutztyps, der eine voreingestellte Wiederherstellung für den fehlertoleranten Typ ist.

7. Ende-zu-Ende-Umleitungsvorrichtung, angewendet auf eine Multi-Domänen-Steuerung, die in einer Netzwerkarchitektur umfasst ist, wobei die Netzwerkarchitektur mehrere Einzeldomänen-Steuerungen und die Multi-Domänen-Steuerung umfasst, wobei jede Einzeldomänen-Steuerung eine Domäne steuert, die Multi-Domänen-Steuerung mehrere Domänen steuert, zwei Ports für domänenübergreifende Dienste in unterschiedlichen Domänen angeordnet sind, die Multi-Domänen-Steuerung mit allen Einzeldomänen-Steuerungen verbunden ist, und die Vorrichtung Folgendes umfasst:
ein Empfangsmodul (30), das zum Empfangen einer Fehlerbenachrichtigung, die von einer Einzeldomänen-Steuerung gemeldet wird, eingerichtet ist;
ein Suchmodul (32), das zum Suchen nach einem domänenübergreifenden End-to-End-Dienst, der der Fehlerbenachrichtigung entspricht, gemäß der Fehlerbenachrichtigung eingerichtet ist; wobei die Vorrichtung durch Folgendes gekennzeichnet ist:
ein Sendemodul (34), das zum Senden einer Dienstaktualisierungsanforderung und einer Diensteinrichtungsanforderung an alle Einzeldomänen-Steuerungen von Domänen, durch die der domänenübergreifende End-to-End-Dienst durchläuft, gemäß dem domänenübergreifenden End-to-End-Dienst eingerichtet ist,
wobei das Einrichten des Sendemoduls (34) zum Senden einer Dienstaktualisierungsanforderung und einer Diensteinrichtungsanforderung an alle Einzeldomänen-Steuerungen von Domänen, durch die der domänenübergreifende End-to-End-Dienst durchläuft, gemäß dem domänenübergreifenden End-to-End-Dienst das Einrichten des Sendemoduls (34) für die folgenden Aufgaben umfasst:
Erfassen eines domänenübergreifenden Umleitungspfads und einer domänenübergreifenden Umleitungspfad-Ressource für den domänenübergreifenden End-to-End-Dienst; und
Verwenden eines Konnektivitätsdienst-Endpunkts, der einem netzwerkseitigen Grenzanschluss jeder einzelnen Domäne in der domänenübergreifenden Umleitungspfadressource entspricht, als einen neu hinzugefügten Konnektivitätsdienst-Endpunkt eines Einzeldomänen-Dienstes, der der jeweiligen Einzeldomäne in dem domänenübergreifenden End-to-End-Dienst entspricht, Senden einer Dienstaktualisierungsanforderung an eine Einzeldomänen-Steuerung in einer Grenzdomäne, durch die der domänenübergreifende Umleitungspfad verläuft, und Senden einer Diensteinrichtungsanforderung an eine Einzeldomänen-Steuereinheit in einer Zwischendomäne, durch die der domänenübergreifende Umleitungspfad verläuft;
wobei nach dem Senden der Dienstaktualisierungsanforderung und der Diensteinrichtungsanforderung an alle Einzeldomänen-Steuerungen von Domänen, durch die der domänenübergreifende End-to-End-Dienst durchläuft, durch das Sendemodul (34) gemäß dem domänenübergreifenden End-to-End-Dienst
die Vorrichtung zum Empfangen von Antwortergebnissen der Dienstaktualisierungsanforderung und der Diensteinrichtungsanforderung, die von allen Einzeldomänen-Steuerungen der Domänen, durch die der domänenübergreifende End-to-End-Dienst läuft, gesendet werden, und zum Perfektionieren von Informationen des domänenübergreifenden End-to-End-Dienstes gemäß den Dienstinformationen jeder Domäne eingerichtet ist,
wobei ein Antwortergebnis der Dienstaktualisierungsanforderung Dienstinformationen über einen Einzeldomänen-Dienst in einer Domäne trägt, zu der die Einzeldomänen-Steuerung gehört, die die Dienstaktualisierungsanforderung empfängt, und ein Antwortergebnis der Diensteinrichtungsanforderung Einzeldomänen-Dienstinformationen einer Domäne trägt, zu der die Einzeldomänen-Steuerung gehört, die die Diensteinrichtungsanforderung empfängt.

8. Speichermedium, umfassend gespeicherte Programme, **dadurch gekennzeichnet, dass** die Programme, wenn sie ausgeführt werden, das Verfahren nach einem der Ansprüche 1 bis 6 ausführen.

9. Prozessor, der konfiguriert ist, um Programme auszuführen, **dadurch gekennzeichnet, dass** die Programme, wenn sie ausgeführt werden, das Verfahren nach einem der Ansprüche 1 bis 6 ausführen.

## Revendications

1. Procédé de reroutage bout à bout, mise en oeuvre sur une architecture de réseau, dans lequel l'architecture réseau comprend plusieurs contrôleurs de mono-domaine et un contrôleur de multi-domaine, chaque contrôleur de mono-domaine contrôle un domaine, le contrôleur de multi-domaine contrôle plusieurs domaines, deux ports pour des services inter-domaine sont situés dans des domaines différents, le contrôleur de multi-domaine est connecté à tous les contrôleurs de mono-domaine, et le procédé comprend :
recevoir (S102) une notification de défaillance rapportée par un contrôleur de mono-domaine ;
rechercher (S 104), en fonction de la notification de défaillance, un service inter-domaine bout à bout correspondant à la notification de défaillance ; le procédé étant **caractérisée par** :
envoyer (S 106), en fonction du service inter-domaine bout à bout, une demande de mise à jour de service et une demande de paramétrage de service à tous les contrôleurs de mono-domaine des domaines par lesquels passe le service inter-domaine bout à bout pour mettre en oeuvre un reroutage pour le service inter-domaine bout à bout,
dans lequel l'étape d'envoyer (S 106), en fonction du service inter-domaine bout à bout, la demande de mise à jour de service et la demande de paramétrage de service à tous les contrôleurs de mono-domaine des domaines par lesquels passe le service inter-domaine bout à bout comprend :
acquérir un chemin de reroutage inter-domaine et une ressource de chemin de reroutage inter-domaine pour le service inter-domaine bout à bout ; et
prendre un point de bout de service de connectivité correspondant à un port de limite de côté réseau de chaque mono-domaine dans la ressource de chemin de reroutage inter-domaine en tant que point de bout de service de connectivité nouvellement ajouté d'un service de mono-domaine correspondant à chaque mono-domaine dans le service inter-domaine bout à bout, envoyer une demande de mise à jour de service à un contrôleur de mono-domaine dans un domaine de limite par lequel passe le chemin de reroutage inter-domaine, et envoyer une demande de paramétrage de service à un contrôleur de mono-domaine dans un domaine intermédiaire par lequel passe le chemin de reroutage inter-domaine ; et
après l'étape d'envoyer (S106), en fonction du service inter-domaine bout à bout, la demande de mise à jour de service et la demande de paramétrage de service à tous les contrôleurs de mono-domaine des domaines par lesquels passe le service inter-domaine bout à bout, le procédé comprend en outre :
recevoir des résultats de réponse à la demande de mise à jour de service et à la demande de paramétrage de service envoyées par tous les contrôleurs de mono-domaine des domaines par lesquels passe le service inter-domaine bout à bout, et mettre au point des informations du service inter-domaine bout à bout en fonction d'informations de service de chaque domaine,
dans lequel un résultat de réponse à la demande de mise à jour de service véhicule des informations de service sur un service de mono-domaine dans un domaine auquel appartient le contrôleur de mono-domaine recevant la demande de mise à jour de service, et un résultat de réponse à la demande de mise à jour de service véhicule des informations de service de mono-domaine d'un domaine auquel appartient le contrôleur de mono-domaine recevant la demande de paramétrage de service.

2. Procédé selon la revendication 1, dans lequel l'étape de recevoir (S102) la notification de défaillance rapportée par le contrôleur de mono-domaine comprend au moins l'une des étapes suivantes :
recevoir une première notification de défaillance d'une défaillance de rétablissement de service rapportée par le contrôleur de mono-domaine, dans laquelle la première notification de défaillance véhicule un identifiant unique universel du service de mono-domaine ;
recevoir une deuxième notification de défaillance générée par une défaillance de port inter-domaine rapportée par le contrôleur de mono-domaine, dans laquelle la deuxième notification de défaillance véhicule un identifiant unique universel du port inter-domaine ; ou
recevoir une troisième notification de défaillance générée par une défaillance de liaison inter-domaine rapportée par le contrôleur de mono-domaine, dans laquelle la troisième notification de défaillance véhicule un identifiant unique universel de la liaison inter-domaine.

3. Procédé selon la revendication 2, dans lequel dans le cas de réception de la première notification de défaillance, l'étape de rechercher (S104), en fonction de la notification de défaillance, le service inter-domaine bout à bout correspondant à la notification de défaillance comprend :
rechercher un service inter-domaine bout à bout associé au service de mono-domaine dans le contrôleur de multi-domaine en fonction de l'identifiant unique universel du service de mono-domaine.

4. Procédé selon la revendication 2, dans lequel dans le cas de réception de la deuxième notification de défaillance, l'étape de rechercher (S104), en fonction de la notification de défaillance, le service inter-domaine bout à bout correspondant à la notification de défaillance comprend :
rechercher des informations de port enregistrées localement du port inter-domaine en fonction de l'identifiant unique universel du port inter-domaine ; et
rechercher tous les services inter-domaine bout à bout portés sur le port inter-domaine en fonction des informations de port.

5. Procédé selon la revendication 2, dans lequel dans le cas de réception de la troisième notification de défaillance, l'étape de rechercher (S 104), en fonction de la notification de défaillance, le service inter-domaine bout à bout correspondant à la notification de défaillance comprend :
rechercher le service inter-domaine bout à bout correspondant en fonction de l'identifiant unique universel de la liaison inter-domaine.

6. Procédé selon la revendication 1, dans lequel l'étape d'acquérir le chemin de reroutage inter-domaine et la ressource de chemin de reroutage inter-domaine pour le service inter-domaine bout à bout comprend :
analyser un type de tolérance à pannes du service inter-domaine bout à bout ; et
dans le cas où un type de protection est de rétablissement dynamique pour le type de tolérance à pannes, obtenir en temps réel le chemin de reroutage inter-domaine et les ressources de chemin de reroutage inter-domaine en calculant un chemin inter-domaine et une ressource inter-domaine pour le chemin de reroutage inter-domaine du service inter-domaine bout à bout,
ou, dans lequel l'étape d'acquérir le chemin de reroutage inter-domaine et la ressource de chemin de reroutage inter-domaine pour le service inter-domaine bout à bout comprend :
analyser un type de tolérance à pannes du service inter-domaine bout à bout ; et
dans le cas où un type de protection est de rétablissement prédéfini pour le type de tolérance à pannes, obtenir le chemin de reroutage inter-domaine et le chemin de reroutage inter-domaine pour le service inter-domaine bout à bout en fonction d'un chemin de reroutage inter-domaine prédéfini et d'une ressource inter-domaine prédéfinie.

7. Dispositif de reroutage bout à bout, appliqué à un contrôleur de multi-domaine compris dans une architecture de réseau, dans lequel l'architecture réseau comprend plusieurs contrôleurs de mono-domaine et un contrôleur de multi-domaine, chaque contrôleur de mono-domaine contrôle un domaine, le contrôleur de multi-domaine contrôle plusieurs domaines, deux ports pour des services inter-domaine sont situés dans des domaines différents, le contrôleur de multi-domaine est connecté à tous les contrôleurs de mono-domaine, et le dispositif comprend :
un module de réception (30), qui est configuré pour recevoir une notification de défaillance rapportée par un contrôleur de mono-domaine ;
un module de recherche (32), qui est configuré pour rechercher, en fonction de la notification de défaillance, un service inter-domaine bout à bout correspondant à la notification de défaillance ; le dispositif étant **caractérisé en ce qu'**il comprend :
un module d'envoi (34), qui est configuré pour envoyer, en fonction du service inter-domaine bout à bout, une demande de mise à jour de service et une demande de paramétrage de service à tous les contrôleurs de mono-domaine des domaines par lesquels passe le service inter-domaine bout à bout,
dans lequel le fait que le module d'envoi (34) est configuré pour envoyer, en fonction du service inter-domaine bout à bout, une demande de mise à jour de service et une demande de paramétrage de service à tous les contrôleurs de mono-domaine des domaines par lesquels passe le service inter-domaine bout à bout consiste à ce que le module d'envoi (34) est configuré pour :
acquérir un chemin de reroutage inter-domaine et une ressource de chemin de reroutage inter-domaine pour le service inter-domaine bout à bout ; et
prendre un point de bout de service de connectivité correspondant à un port de limite de côté réseau de chaque mono-domaine dans la ressource de chemin de reroutage inter-domaine en tant que point de bout de service de connectivité nouvellement ajouté d'un service de mono-domaine correspondant à chaque mono-domaine dans le service inter-domaine bout à bout, envoyer une demande de mise à jour de service à un contrôleur de mono-domaine dans un domaine de limite par lequel passe le chemin de reroutage inter-domaine, et envoyer une demande de paramétrage de service à un contrôleur de mono-domaine dans un domaine intermédiaire par lequel passe le chemin de reroutage inter-domaine ;
une fois que le module d'envoi (34) a envoyé, en fonction du service inter-domaine bout à bout, la demande de mise à jour de service et la demande de paramétrage de service à tous les contrôleurs de mono-domaine des domaines par lesquels passe le service inter-domaine bout à bout,
le dispositif est configuré pour recevoir des résultats de réponse à la demande de mise à jour de service et à la demande de paramétrage de service envoyées par tous les contrôleurs de mono-domaine des domaines par lesquels passe le service inter-domaine bout à bout, et mettre au point des informations du service inter-domaine bout à bout en fonction d'informations de service de chaque domaine,
dans lequel un résultat de réponse à la demande de mise à jour de service véhicule des informations de service sur un service de mono-domaine dans un domaine auquel appartient le contrôleur de mono-domaine recevant la demande de mise à jour de service, et un résultat de réponse à la demande de mise à jour de service véhicule des informations de service de mono-domaine d'un domaine auquel appartient le contrôleur de mono-domaine recevant la demande de paramétrage de service.

8. Support de stockage, comprenant des programmes stockés, **caractérisé en ce que**, lorsqu'ils sont exécutés, les programmes mettent en oeuvre le procédé selon l'une quelconque des revendications 1 à 6.

9. Processeur, configuré pour exécuter des programmes, **caractérisé en ce que**, lorsqu'ils sont exécutés, les programmes mettent en oeuvre le procédé selon l'une quelconque des revendications 1 à 6.
